# EUROPÄISCHE PATENTANMELDUNG

(11) **EP 2 570 288 A2**
(43) Veröffentlichungstag der Anmeldung: **20.03.2013**
(21) Anmeldenummer: 12183849.4
(22) Anmeldetag: 11.09.2012
(51) Int. Cl.: B60L 1/00, B60L 3/00, B60L 11/18

(54) **Vorrichtung zur Temperierung einer Mehrzahl von Komponenten eines Fahrzeugs und Fahrzeugsystem**

(30) Priorität: 13.09.2011 DE 102011082584
(71) Anmelder: Behr GmbH & Co. KG, 70469 Stuttgart (DE)
(72) Erfinder: Neumeister, Dr.-Ing. Dirk, 70374 Stuttgart (DE); Stripf, Dr.-Ing. Matthias, 76133 Karlsruhe (DE); Wehowski, Dr.-Ing. Manuel, 70563 Stuttgart (DE)
(74) Vertreter: Grauel, Andreas

(57) **Zusammenfassung**

Die vorliegende Erfindung betrifft eine Vorrichtung (110) zur Temperierung einer Mehrzahl von Komponenten (101, 102) eines Fahrzeugs. Die Vorrichtung (110) weist einen ersten Wärmeübertrager (121) und einen zweiten Wärmeübertrager (122) auf, die miteinander verbunden sind, um einen geschlossenen Kältemittelkreislauf zu bilden. Die Vorrichtung (110) weist ferner ein erstes Mehrwegeventil (131), ein zweites Mehrwegeventi (132), ein drittes Mehrwegeventil (133) und ein viertes Mehrwegeventil (134) zum Verbinden des ersten und des zweiten Wärmeübertragers (121, 122) mit einer ersten Komponente (101) und einer zweiten Komponente (102) des Fahrzeugs auf.

## Beschreibung

Die vorliegende Erfindung bezieht sich auf eine Vorrichtung zur Temperierung einer Mehrzahl von Komponenten eines Fahrzeugs und auf ein Fahrzeugsystem, das die Vorrichtung zur Temperierung aufweist.

In Fahrzeugen, wie zum Beispiel Hybridfahrzeugen oder Elektrofahrzeugen, ist beim Einsatz von modernen Hochleistungsbaherien dafür Sorge zu tragen, dass sich die Temperatur der Batterien während des Betriebs in einem gewissen Intervall befindet, um die Effizienz, Funktionstüchtigkeit und Sicherheit der Batterien sicherzustellen. Einerseits sinkt der Wirkungsgrad der Batteriezellen der Batterien bei Unterschreitung einer geeigneten Betriebstemperatur sehr stark und die Zellen produzieren eine hohe Verlustleistung. Andererseits laufen oberhalb eines geeigneten Betriebsbereichs Prozesse innerhalb der Zellen ab, die zu irreversiblen Schädigungen führen. Aus diesen Gründen ist eine Batterietemperierung, d. h. Kühlung bzw. Beheizung, erforderlich. Des Weiteren ist häufig eine Fahrzeugkabinenklimatisierung erforderlich, d. h. die Beheizung und Kühlung des Fahrzeuginnenraums, in Abhängigkeit von den vorliegenden Umgebungsbedingungen. Auch weitere Komponenten, wie beispielsweise Elektronikkomponenten, benötigen eine Temperierung. Zur Temperierung der unterschiedlichen Komponenten werden zumeist Wärmeübertragungsfluide, wie beispielsweise Kältemittel, Kühlmittel, Luft, etc. verwendet. In Hybrid- und Elektrofahrzeugen sowie auch im off-highway-Bereich spielt das Thermomanagement eine bedeutende Rolle. Für diverse Fahrzeugkomponenten müssen sowohl eine Heizung als auch eine Kühlung bereitgestellt werden. Die Vielzahl der zu temperierenden Komponenten und deren Zusammenspiel sowie die Notwendigkeit einer gleichzeitigen Darstellung von Heizung und Kühlung für verschiedene Komponenten in Abhängigkeit von Umgebungs-, Betriebs- und Randbedingungen ergeben eine komplexe Temperieraufgabe. Häufig werden zur Erfüllung sämtlicher Temperieraufgaben mehrere Kühl- und Heizkreisläufe eingesetzt, die entweder unabhängig voneinander betrieben werden oder auch in Wechselwirkung miteinander stehen können. Die Komplexität des Thermomanagements mit den verschiedenen zu temperierenden Komponenten und deren Wechselwirkungen erfordert ein breites und fundiertes Wissen zur Auslegung eines geeigneten, funktionsfähigen Temperiersystems.

Es ist die Aufgabe der vorliegenden Erfindung, eine kompakte, zentralisierte Vorrichtung zur Temperierung einer Mehrzahl von Komponenten eines Fahrzeugs und ein Fahrzeugsystem, das die Vorrichtung aufweist, zu schaffen.

Diese Aufgabe wird durch eine Vorrichtung zur Temperierung einer Mehrzahl von Komponenten eines Fahrzeugs sowie ein Fahrzeugsystem gemäß den Hauptansprüchen gelöst.

Der vorliegenden Erfindung liegt die Erkenntnis zugrunde, dass eine Vorrichtung zur Temperierung insbesondere so aufgebaut sein kann, dass die zu temperierenden Komponenten beispielsweise bedarfsgerecht und unabhängig mit Kühlmedium von einem oder zwei Wärmeübertragern versorgt werden können. Die Vorrichtung ist dabei ausgebildet, um die Temperieraufgaben in einem Fahrzeug insbesondere durch vorteilhafte Führung und Lenkung der Kühlmedienströme zu erfüllen,

Vorteilhafterweise kann gemäß Ausführungsbeispielen der vorliegenden Erfindung beispielsweise eine zentrale Temperiereinheit bzw. Vorrichtung zur Temperierung in einem Fahrzeug selbständig die Temperierung unterschiedlicher Komponenten im Fahrzeug über ein Kühlmedium übernehmen. Die Erfindung gestattet die autarke, selbstgesteuerte, bedarfsgerechte Heizung und Kühlung von Komponenten, beispielsweise in Hybrid- und Elektrofahrzeugen sowie in Non-Automotive- bzw. off-highway-Anwendungen. Dementsprechend bietet die Vorrichtung eine einfache Möglichkeit zur Umsetzung der verschiedenen, komplex gestalteten Temperierungsaufgaben im Fahrzeug. Gemäß Ausführungsbeispielen der vorliegenden Erfindung ist die Vorrichtung kostengünstig, bauraumsparend, energieeffizient und einfach regel- bzw. steuerbar gestattet. Weitere Vorteile der Erfindung bestehen darin, dass der Kältemittelkreis äußerst kompakt ist, wenig Kältemittel beinhaltet und außerhalb des Fahrgastraumes angeordnet werden kann. Somit sind keine langen Kältemittelleitungen durch das Fahrzeug erforderlich. Insbesondere bei sicherheitsrelevanten Kältemitteln kann ein Austreten in den Fahrgastraum, wie z. B. bei einem Unfall, als kritisch angesehen werden. Die Gefahr des Eintretens von giftigen Kältemittel in den Fahrgastraum, z. B. bei einem Unfall, kann so vermieden werden. Bei der Vorrichtung gemäß Ausführungsbeispielen der vorliegenden Erfindung werden lediglich Kühlmittelleitungen mit kostengünstigerem Kühlmedium zu den jeweiligen Komponenten geführt. Der Kältekreislauf wird also möglichst kompakt gestaltet und die Kühlung bzw. Beheizung der Einzelkomponenten erfolgt über das zu den einzelnen Komponenten beispielsweise über Schläuche bzw. Leitungen geführte Kühlmittel. Somit ist der Einsatz einer nur geringen Kältemittelmenge möglich, Die Platzierung und Anordnung der Vorrichtung kann dementsprechend frei gewählt werden.

Die vorliegende Erfindung schafft eine Vorrichtung zur Temperierung einer Mehrzahl von Komponenten eines Fahrzeugs, wobei die Vorrichtung folgende Merkmale aufweist:
einen ersten Wärmeübertrager mit einem Kühlmitteleingang, einem Kühlmittelausgang, einem Kältemitteleingang und einem Kältemittelausgang und einen zweiten Wärmeübertrager mit einem Kühlmitteleingang, einem Kühlmitelausgang, einem Kältemitteleingang und einem Kältemittelausgang, wobei der Kältemittelausgang des ersten Wärmeübertragers mit dem Kältemitteleingang des zweiten Wärmeübertragers und der der Kältemittelausgang des zweiten Wärmeübertragers mit dem Kältemitteleingang des ersten Wärmeübertragers verbunden ist, um einen geschlossenen Kältemittelkreislauf zu bilden;
ein erstes Mehrwegeventil für Kühlmittel mit einem an den Kühlmittelausgang des ersten Wärmeübertragers angeschlossenen Eingangsanschluss sowie mit zumindest einem an eine erste Komponente des Fahrzeugs anschließbaren, ersten Ausgangsanschluss und einem an eine zweite Komponente des Fahrzeugs anschließbaren, zweiten Ausgangsanschluss;
ein zweites Mehrwegeventil für Kühlmittel mit einem an den Kühlmittelausgang des zweiten Wärmeübertragers angeschlossenen Eingangsanschluss sowie mit zumindest einem an die erste Komponente des Fahrzeugs anschließbaren, ersten Ausgangsanschluss und einem an die zweite Komponente des Fahrzeugs anschließbaren, zweiten Ausgangsanschluss;
ein drittes Mehrwegeventil für Kühlmittel mit einem an die erste Komponente des Fahrzeugs anschließbaren Eingangsanschluss, mit einem an den Kühlmitteleingang des ersten Wärmeübertragers angeschlossenen, ersten Ausgangsanschiuss und mit einem an den Kühlmitteleingang des zweiten Wärmeübertragers angeschlossenen, zweiten Ausgangsanschluss; und
ein viertes Mehrwegeventil für Kühlmittel mit einem an die zweite Komponente des Fahrzeugs anschließbaren Eingangsanschluss, mit einem an den Kühlmitteleingang des ersten Wärmeübertragers angeschlossenen, ersten Ausgangsanschluss und mit einem an den Kühlmitteleingang des zweiten Wärmeübertragers angeschlossenen, zweiten Ausgangsanschluss.

Wahlweise können auch weitere Mehrwegeventile eingesetzt werden.

Bei dem Fahrzeug kann es sich um ein Fahrzeug zur Personen-, Last- oder Warenbeförderung handeln, beispielsweise einen Personenkraftwagen, Bus, Lastkraftwagen, Gabelstapler oder dergleichen, insbesondere ein Fahrzeug mit Elektroantrieb oder Hybridantrieb, wobei das Fahrzeug ein straßengebundenes oder schienengebundenes Fahrzeug sein kann. Die Mehrwegeventile können auf geeignete Weise, beispielsweise magnetisch, elektrisch, hydraulisch etc., betätigbar und auf geeignete Weise steuerbar sein. Bei den Mehrwegeventilen, insbesondere dem ersten Mehrwegeventil und dem zweiten Mehrwegeventil, kann es sich zumindest um Zweiwegeventile handeln. Die Vorrichtung kann Fluidleitungen aufweisen, mittels derer die Einheiten der Vorrichtung, wie beispielsweise Wärmeüberträger und Mehrwegeventile, zur Ermöglichung eines Fluidflusses aneinander angeschlossen sind. Auch die zu temperierenden Komponenten des Fahrzeugs können mittels Fluidleitungen an die entsprechenden Einheiten der Vorrichtung fluidmäßig angeschlossen sein. Bei den Komponenten des Fahrzeugs kann es sich beispielsweise um einen elektrochemischen Energiespeicher bzw. eine Batterie des Fahrzeugs, eine Kabine bzw. einen Fahrzeuginnenraum, Laderaum oder Fahrgastraum des Fahrzeugs, einen Motor oder eine Leistungselektronik etc. handeln. Auch die Komponenten können Fluidanschlüsse für Kühlmittel aufweisen.

Die Mehrwegeventile können jeweils ausgebildet sein, um einen Fluss des Kühlmittels von dem Eingangsanschluss zu einem der Ausgangsanschlüsse oder in einem veränderbaren Massenstromverhältnis zu beiden Ausgangsanschlüssen zu ermöglichen. Somit können die Mehrwegeventile ausgebildet sein, um in einer ersten Schaltstellung bzw. Ventilstellung einen Fluidfluss von dem Eingangsanschluss zu dem ersten Ausgangsanschluss zu ermöglichen. Auch können die Mehrwegeventile ausgebildet sein, um in einer zweiten Schaltstellung bzw. Ventilstellung einen Fluidfluss von dem Eingangsanschluss zu dem zweiten Ausgangsanschluss zu ermöglichen. Schließlich können die Mehrwegeventile ausgebildet sein, um in einem Bereich von dritten Schaltstellungen bzw. Ventilstellungen einen Fluidfluss von dem Eingangsanschluss zu dem ersten Ausgangsanschluss sowie zu dem zweiten Ausgangsanschluss zu ermöglichen, wobei der Fluidfluss zwischen dem ersten Ausgangsanschluss und dem zweiten Ausgangsanschluss in einem variablen Verhältnis aufteilbar ist. Eine solche Ausführungsform bietet den Vorteil, dass die Temperierung der Komponenten besonders flexibel, unabhängig und bedarfsgerecht erfolgen kann. Die Funktion der Mehrwegeventile kann auch durch eine Mehrzahl von Absperrventilen abgebildet werden.

Ferner kann eine elektronische Steuereinrichtung vorgesehen sein, die mit einer Eingabeschnittstelle zum Empfangen einer Steuerinformation und mit den Mehrwegeventilen elektrisch verbunden ist und ausgebildet ist, um die Mehrwegeventile basierend auf der Steuerinformation anzusteuern. Somit kann die Steuereinrichtung ausgebildet sein, unabhängig von der Steuerinformation die Mehrwegeventile zu anzusteuern, dass eine spezifische Schaltstellung bzw. Ventilstellung eingestellt wird. Eine solche Ausführungsform bietet den Vorteil, dass die Kühlung bzw. Heizung entsprechender Komponenten mittels der integrierten Steuerung der Ventile von der Vorrichtung selbständig übernommen werden kann. Somit wird die Temperierfunktion gemäß der Steuerinformation autark und vollständig von der Vorrichtung durchgeführt.

Gemäß einer Ausführungsform kann der erste Wärmeübertrager ein Kondensator sein. Der zweite Wärmeübertrager kann ein Chiller (Wärmeübertrager zwischen Kälte- und Kühlmittel) sein. Dabei kann der Kondensator bzw. Verflüssiger auf einer Hochdruckseite oder Warmseite der Vorrichtung angeordnet sein. Der Chiller kann auf einer Niederdruckseite oder Kaltseite der Vorrichtung angeordnet sein. Jeder der Wärmeübertrager ist ausgebildet, um einen Wärmeaustausch zwischen Kältemittel und Kühlmittel zu ermöglichen. Eine solche Ausführungsform bietet den Vorteil, dass auf diese Weise eine Temperierung der Komponenten durch Beheizung und/oder Kühlung derselben von solchen Wärmeübertragern effizient erzielt werden kann.

Gemäß einer Ausführungsform kann das erste Mehrwegeventil einen an eine dritte Komponente des Fahrzeugs anschließbaren, dritten Ausgangsanschluss aufweisen. Auch kann das zweite Mehrwegeventil einen an die dritte Komponente des Fahrzeugs anschließbaren, dritten Ausgangsanschluss aufweisen. Dabei kann die Vorrichtung ein fünftes Mehrwegeventil für Kühlmittel mit einem an die dritte Komponente des Fahrzeugs anschließbaren Eingangsanschluss, mit einem an den Kühlmitteleingang des ersten Wärmeübertragers angeschiosseien, ersten Ausgangsanschluss und mit einem an den Kühlmiheleingang des zweiten Wärmeübertragers angeschlossenen, zweiten Ausgangsanschluss aufweisen. Auf diese Weise kann auch eine weitere Komponente des Fahrzeugs an die Vorrichtung angeschlossen sein. Hierbei weist das erste Mehrwegeventil einen weiteren Ausgangsanschluss auf, weist das zweite Mehrwegeventil einen weiteren Ausgangsanschluss auf und ist ein weiteres Mehrwegeventil für Kühlmittel mit einem an die weitere Komponente des Fahrzeugs anschließbaren Eingangsanschluss, mit einem an den Kühlmitteleingang des ersten Wärmeübertragers angeschlossenen, ersten Ausgangsanschiuss und mit einem an den Kühlmitteleingang des zweiten Wärmeübertragers angeschlossennen, zweiten Ausgangsanschluss vorgesehen. Eine solche Ausführungsform bietet den Vorteil, dass zumindest eine weitere zu temperierende Komponente unkompliziert an die Vorrichtung angeschlossen werden kann. Somit ist eine Anzahl der Komponenten, welche mittels der Vorrichtung temperiert werden können, auf einfache Weise um ein oder mehrere weitere Komponenten enveiterbar.

Hierbei kann die dritte Komponente ein Niededemperaturkühler sein. Eine solche Ausführungsform bietet den Vorteil, dass eine effiziente, gleichzeitige und bedarfsgerechte Temperierung der ersten Komponente sowie der zweiten Komponente ermöglicht wird. Des Weiteren kann eine Durchströmung des Niedertemperaturkühlers mit Kühlmittel auch genutzt werden, wenn gewünscht wird, andere Komponenten nicht mit vollem Massenstrom des Kühlmittels zu beaufschlagen.

Zudem kann eine erste Kühlmittelpumpe vorgesehen sein, die zwischen den Kühlmittelausgang des ersten Wärmeübertragers und den Eingangsanschluss des ersten Mehrwegeventils geschaltet ist. Auch kann eine zweite Kühlmittelpumpe vorgesehen sein, die zwischen den Kühlmihelausgang des zweiten Wärmeübertragers und den Eingangsanschluss des zweiten Mehrwegeventils geschaltet ist. Die Kühlmittelpumpen können mit der elektronischen Steuereinrichtung elektrisch verbunden sein und von derselben ansteuerbar sein. Eine solche Ausführungsform bietet den Vorteil, dass eine Strömungsgeschwindigkeit des Kühlmittels mittels der Pumpen genau und bedarfsgerecht gesteuert werden kann.

Des Weiteren kann ein Kompressor vorgesehen sein, der zwischen den Kältemittelausgang des zweiten Wärmeübertragers und den Kältemitteleingang des ersten Wärmeübertragers geschaltet ist. Der Kompressor kann mit der elektronischen Steuereinrichtung elektrisch verbunden sein und von derselben ansteuerbar sein. Somit ist der Kompressor in den Kältemittelkreislauf geschaltet. Eine solche Ausführungsform bietet den Vorteil, dass die Vorrichtung selbständig die Kühlung bzw. Beheizung entsprechender Komponenten mit der integrierten Steuerung des Kompressors und der Ventile übernehmen kann. Mittels des Kompressors kann der Kältemihelkreislauf bedarfsgerecht gesteuert werden. Somit kann die Temperierfunktion vollständig von der Vorrichtung ausgeführt werden.

Ferner kann ein Drosselelement vorgesehen sein, das zwischen den Kältemittelausgang des ersten Wärmeübertragers und den Kältemitteleingang des zweiten Wärmeübertragers geschaltet ist. Somit ist das Drosselelement in den Kältemihelkreislauf geschaltet. Eine solche Ausführungsform bietet den Vorteil, dass der Kältemittelkreislauf effizient betrieben werden kann.

Die vorliegende Erfindung schafft ferner ein Fahrzeugsystem mit folgenden Merkmalen:
einer ersten zu temperierenden Komponente und einer zweiten zu temperierenden Komponente; und
einer Vorrichtung zur Temperierung einer Mehrzahl von Komponenten gemäß einer beschriebenen Ausführungsform, wobei der erste Ausgangsanschluss des ersten Mehrwegeventils, der erste Ausgangsanschluss des zweiten Mehrwegeventils und der Eingangsanschluss des dritten Mehrwegeventils an die erste Komponente angeschlossen sind, wobei der zweite Ausgangsanschluss des ersten Mehrwegeventils, der zweite Ausgangsanschluss des zweiten Mehrwegeventils und der Eingangsanschluss des vierten Mehrwegeventils an die zweite Komponente angeschlossen sind.

In einem solchen Fahrzeugsystem kann die oben genannte Vorrichtung vorteilhaft eingesetzt bzw. verwendet werden, um die Komponenten zu temperieren.

Vorteilhafte Ausführungsbeispiele der vorliegenden Erfindung werden nachfolgend Bezug nehmend auf die beiliegende Zeichnung näher erläutert. Es zeigt:

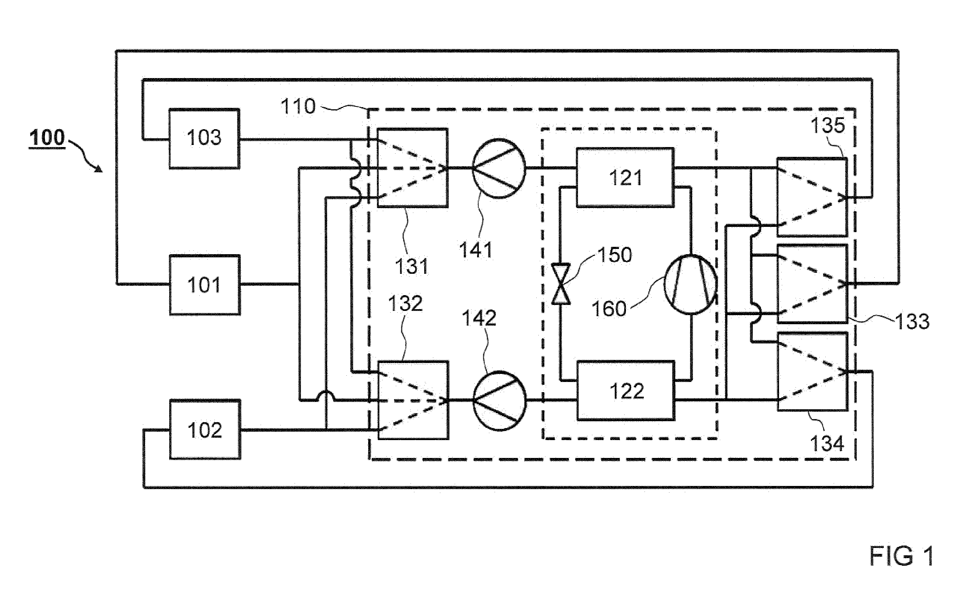

- Fig. 1: eine schematische Darstellung eines Fahrzeugsystems gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

Fig. 1 zeigt eine schematische Darstellung eines Fahrzeugsystems 100 gemäß einem Ausführungsbeispiel der vorliegenden Erfindung. Das Fahrzeugsystem 100 weist eine erste Komponente 101, bei der es sich gemäß dem vorliegenden Ausführungsbeispiel um eine Klimatisierungseinrichtung zur Klimatisierung einer Kabine des Fahrzeugs handeln kann, eine zweite Komponente 102, bei der es sich gemäß dem vorliegenden Ausführungsbeispiel um eine Batterie des Fahrzeugs handeln kann, eine dritte Komponente 103, bei der es sich gemäß dem vorliegenden Ausführungsbeispiel um einen Niedertemperaturkühter handeln kann, eine Vorrichtung 110 zur Temperierung, einen ersten Wärmeübertrager 121, bei dem es sich gemäß dem vorliegenden Ausführungsbeispiel um einen Kondensator bzw. Verflüssiger handeln kann, einen zweiten Wärmeübertrager 122, bei dem es sich gemäß dem vorliegenden Ausführungsbeispiel um einen Chiller (Wärmeübertrager Kältemittel/Kühlmittel) handeln kann, ein erstes Mehrwegeventil 131, ein zweites Mehrwegeventil 132, ein drittes Mehrwegeventil 133, ein viertes Mehrwegeventil 134, ein fünftes Mehrwegeventil 135, eine erste Kühlmittelpumpe 141, eine zweite Kühlmittelpumpe 142, ein Drosselelement 150 und einen Kompressor 160 auf.

Die Vorrichtung 110 ist ausgebildet, um die Komponenten 101, 102, 103 zu temperieren. Die Vorrichtung 110 weist den ersten Wärmeübertrager 121, den zweiten Wärmeübertrager 122, das erste Mehrwegeventil 131, das zweite Mehrwegeventil 132, das dritte Mehrwegeventil 133, das vierte Mehrwegeventil 134, das fünftes Mehrwegeventil 135, die erste Kühlmittelpumpe 141, die zweite Kühlmittelpumpe 142, das Drosselelement 150 und den Kompressor 160, sowie in Fig. 1 nicht explizit mit Bezugszeichen versehene Fluidleitungen auf, welche die Elemente der Vorrichtung 110 fluidmäßig verbinden.

Der erste Wärmeübertrager 121 kann ein Kondensator bzw. Verflüssiger sein. Der erste Wärmeübertrager 121 weist einen Kühlmitteleingang, einen Kühlmittelausgang, einen Kältemitteleingang und einen Kältemittelausgang auf. Der Kältemittelausgang des ersten Wärmeübertragers 121 ist mittels einer Fluidleitung für Kältemittel mit dem Kältemitteleingang des zweiten Wärmeübertragers 122 verbunden. Der Kühlmitteleingang des ersten Wärmeübertragers 121 kann mittels Fluidleitungen für Kühlmittel an die ersten Ausgangsanschlüsse des dritten Mehrwegeventils 133, des vierten Mehrwegeventils 134 und des fünften Mehrwegeventils 135 angeschlossen sein. Der Kühlmittelausgang des ersten Wärmeübertragers 121 kann mittels einer Fluidleitung für Kühlmittel an den Eingangsanschluss des ersten Mehrwegeventils 131 angeschlossen sein, wobei die erste Fluidpumpe 141 zwischen dieselben geschaltet ist.

Der zweite Wärmeüberträger 122 kann ein Chiller sein. Der zweite Wärmeübertrager 122 weist einen Kühlmitteleingang, einen Kühlmitelausgang, einen Kältemitteleingang und einen Kältemittelausgang auf. Der Kältemittelausgang des zweiten Wärmeübertragers 122 ist mittels einer Fluidleitung für Kältemittel mit dem Kältemitteleingang des ersten Wärmeübertragers 121 verbunden. Der Kühlmitteleingang des zweiten Wärmeübertragers 122 kann mittels Fluidleitungen für Kühlmittel an die zweiten Ausgangsanschlüsse des dritten Mehrwegeventils 133, des vierten Mehrwegeventils 134 und des fünften Mehrwegeventils 135 angeschlossen sein. Der Kühlmittelausgang des zweiten Wärmeübertragers 122 kann mittels einer Fluidleitung für Kühlmittel an den Eingangsanschluss des zweiten Mehrwegeventils 132 angeschlossen sein, wobei die zweite Fluidpumpe 142 zwischen dieselben geschaltet ist.

Somit ist durch den ersten Wärmeüberträger 121, den zweiten Wärmeübertrager 122 und die Fluidleitungen für Kältemittel ein geschlossener Kältemittelkreislauf gebildet. Das Drosselelement 150 ist zwischen den Kältemittelausgang des ersten Wärmeübertragers 121 und den Kältemitteleingang des zweiten Wärmeübertragers 122 in den Kältemittelkreislauf geschaltet. Der Kompressor 160 ist zwischen den Kältemittelausgang des zweiten Wärmeübertragers 122 und den Kältemitteleingang des ersten Wärmeübertragers 121 in den Kältemittelkreislauf geschaltet.

Das erste Mehrwegeventil 131 für Kühlmittel weist einen mittels einer Fluidleitung für Kühlmittel an den Kühlmittelausgang des ersten Wärmeübertragers 121 angeschlossenen Eingangsanschluss, einen mittels einer Fluidleitung für Kühlmittel an die erste Komponente 101 des Fahrzeugs angeschlossenen, ersten Ausgangsanschluss, einen mittels einer Fluidleitung für Kühlmittel an eine zweite Komponente 102 des Fahrzeugs angeschlossenen, zweiten Ausgangsanschluss und einen mittels einer Fluidleitung für Kühlmittel an die dritte Komponente 103 des Fahrzeugs angeschlossenen, dritten Ausgangsanschluss auf.

Das zweite Mehrwegeventil 132 für Kühlmittel weist einen mittels einer Fluidleitung für Kühlmittel an den Kühlmittelausgang des zweiten Wärmeübertragers 122 angeschlossenen Eingangsanschluss, einen mittels einer Fluidleitung für Kühlmittel an die erste Komponente 101 des Fahrzeugs angeschlossenen, ersten Ausgangsanschluss, einen mittels einer Fluldleitung für Kühlmittel an die zweite Komponente 102 des Fahrzeugs angeschlossenen, zweiten Ausgangsanschluss und einen mittels einer Fluidleitung für Kühlmittel an die dritte Komponente 103 des Fahrzeugs angeschlossenen, dritten Ausgangsanschluss auf.

Das dritte Mehrwegeventi) 133 für Kühlmittel weist einen mittels einer Fluidleitung für Kühlmittel an die erste Komponente 101 des Fahrzeugs angeschlossenen Eingangsanschluss, einen mittels einer Fluidleitung für Kühlmittel an den Kühlmitteleingang des ersten Wärmeübertragers 121 angeschlossenen, ersten Ausgangsanschluss und einen mittels einer Fluidleitung für Kühlmittel an den Kühlmitteleingang des zweiten Wärmeübertragers 122 angeschlossenen, zweiten Ausgangsanschluss auf.

Das vierte Mehrwegeventil 134 für Kühlmittel weist einen mittels einer Fluidleitung für Kühlmittel an die zweite Komponente 102 des Fahrzeugs angeschlossenen Eingangsanschluss, einen mittels einer Fluidleitung für Kühlmittel an den Kühlmitteleingang des ersten Wärmeübertragers 121 angeschlossenen, ersten Ausgangsanschluss und einen mittels einer Fluidleitung für Kühlmittel an den Kühlmitteleingang des zweiten Wärmeübertragers 122 angeschlossenen, zweiten Ausgangsanschluss auf.

Das fünfte Mehrwegeventil 135 für Kühlmittel weist einen mittels einer Fluidleitung für Kühlmittel an die dritte Komponente 103 des Fahrzeugs angeschlossennen Eingangsanschluss, einen mittels einer Fluidleitung für Kühlmittel an den Kühlmitteleingang des ersten Wärmeübertragers 121 angeschlossenen, ersten Ausgangsanschluss und einen mittels einer Fluidleitung für Kühlmittel an den Kühlmiheleingang des zweiten Wärmeübertragers 122 angeschlossenen, zweiten Ausgangsanschluss auf.

Die Mehrwegeventile 131, 132, 133, 134 und 135 sind jeweils ausgebildet, um einen Fluss des Kühlmittels von dem jeweiligen Eingangsanschluss zu einem der Ausgangsanschlüsse oder in einem veränderbaren Massenstromverhältnis zu mehreren Ausgangsanschlüssen zu ermöglichen.

Die erste Kühlmittelpumpe 141 ist zwischen den Kühlmittelausgang des ersten Wärmeübertragers 121 und den Eingangsanschluss des ersten Mehrwegeventils 131 geschaltet. Die zweite Kühlmittelpumpe 142 ist zwischen den Kühlmittelausgang des zweiten Wärmeübertragers 122 und den Eingangsanschluss des zweiten Mehrwegeventils 132 geschaltet.

Die erste Komponente 101 kann eine Klimatisierungseinrichtung zur Klimatisierung einer Kabine bzw. eines innenraums des Fahrzeugs sein, Die erste Komponente 101 kann an den ersten Ausgangsanschluss des ersten Mehrwegeventils 131, den ersten Ausgangsanschluss des zweiten Mehrwegeventils 132 und den Eingangsanschluss des dritten Mehrwegeventils 133 angeschlossen sein.

Die zweite Komponente 102 kann eine Batterie bzw. ein Energiespeicher des Fahrzeugs sein. Beispielsweise kann es sich um eine zum Antreiben eines Elektrofahrzeugs oder Eiektro-Hybrid-Fahrzeugs handeln. Die zweite Komponente 102 kann an den zweiten Ausgangsanschluss des Mehrwegeventils 131, den zweiten Ausgangsanschluss des zweiten Mehrwegeventils 132 und den Eingangsanschluss des vierten Mehrwegeventil 134 angeschlossen sein.

Die dritte Komponente 103 kann ein Niedertemperaturkühler sein. Die dritte Komponente 103 kann an den dritten Ausgangsanschluss des ersten Mehrwegeventils 131, den dritten Ausgangsanschluss des zweiten Mehrwegeventils 132 und den Eingangsanschluss des fünften Mehrwegeventils 134 angeschlossen sein,

Auch wenn es in Fig. 1 nicht dargestellt ist, kann die Vorrichtung 110 eine elektronische Steuereinrichtung aufweisen, die mit einer Eingabeschnittstelle zum Empfangen einer Steuerinformation und mit den Mehrivegeventilen 131, 132, 133, 134 und 135 sowie mit dem Kompressor 160 und gegebenenfalls mit den Pumpen 141 und 142 elektrisch verbunden ist und ausgebildet ist, um die Mehrwegeventile 131, 132, 133, 134 und 135 sowie den Kompressor 160 und gegebenenfalls die Pumpen 141 und 142 basierend auf der Steuerinformation anzusteuern.

Anders ausgedrückt umfasst die Vorrichtung 110 einen Kältekreislauf, der sowohl auf einer Hochdruckseite bzw. Warmseite einen Wärmeüberträger 121 als auch auf der Niederdruckseite bzw. Kattseite einen Wärmeüberträger 122 zwischen Kältemittel und Kühlmittel beinhaltet. Beide Wärmeübertrager 121, 122 weisen jeweils einen Zu- und Ablauf für das Kühlmittel auf. Des Weiteren umfasst die Vorrichtung 110 Mehrwegeventile zur Verteilung und Zusammenführung der Kühlmittelströme. Sowohl auf der Warmseite als auch auf der Kaltseite kann der Kühlmittelstrom auf jeweils mindestens drei verschiedene Strompfade aufgeteilt werden, wobei auch Zwischenstellungen zwischen zwei Pfaden bzw. gleichzeitige Durchströmung mehrerer Pfade denkbar sind. In der Rückführung ist pro zu temperierender Komponente ein Mehrwegeventil mit jeweils zwei Strompfaden bzw. Aufteilung auf zwei Strompfade angeordnet.

Durch intelligentes Schalten der Ventile können sämtliche Kombinationen aus Kühlung und Heizung bzw. Temperiermodi für die verschiedenen Komponenten realisiert werden, wie es im Folgenden noch detaillierter wird. Gemäß dem in Fig. 1 dargestellten Ausführungsbeispiel sind exemplarisch zwei zu temperierende Komponenten 101, 102 dargestellt, bei denen es sich um eine Batterie 102 bzw. eine Kabine 101 handelt. Der Niedertemperaturkühler 103 ist für den Fall vorteilhaft, dass die Batterie 102 und die Kabine 101 im gleichen Modus (Kühlen bzw. Heizen) temperiert werden sollen. Des Weiteren kann der Niedertemperaturkühler 103 auch durchströmt werden, um andere Komponenten 101, 102 nicht mit vollem Massenstrom zu beaufschlagen. Die Vorrichtung 110 weist eine Schnittstelle auf, der die Steuerinformation zur Heizung und Kühlung der entsprechenden Komponenten 101, 102 mitgeteilt wird. Eine zur Vorrichtung 110 dazugehörige Elektronikeinheit bzw. elektronische Steuereinrichtung verarbeitet diese Steuerinformation und steuert dementsprechend den Kompressor 160 und die Mehrwegeventile 131, 132, 133, 134 und 135 sowie gegebenenfalls die Pumpen 141 und 142 an. Bei einem alternativen Ausführungsbeispiel kann die Steuerinformation zur Kühlung/Heizung auch mehreren Stufen einer Temperierung repräsentieren, wie beispielsweise maximale, mittlere oder geringe Kühlung bzw. Beheizung, etc. Die erste Kühlmittelpumpe 141 ist auf der Warmseite in Fluidflussrichtung unmittelbar hinter dem ersten Wärmeübertrager 121 auf der Warmseite angeordnet, während die zweite Kühlmittelpumpe 142 in Fluidflussrichtung unmittelbar hinter dem zweiten Wärmeübertrager 122 auf der Kaltseite angeordnet ist. Die beiden Kühlmittelpumpen 141, 142 dienen zur Umwälzung des warmen und des kalten Kühlmittels.

In einem ersten Temperiermodus können eine Kühlung der Batterie 102 und eine Kühlung der Kabine 101 bewirkt werden, wobei die Batterie 102 mit Kühlmittel von dem Chiller 122 versorgt wird, die Kabine 101 mit Kühlmittel von dem Chiller 122 versorgt wird und der Niedertemperaturkühler 103 mit Kühlmittel von dem Kondensator 121 versorgt wird. In einem zweiten Temperiermodus können eine Kühlung der Batterie 102 und eine Beheizung der Kabine 101 bewirkt werden, wobei die Batterie 102 mit Kühlmittel von dem Chiller 122 versorgt wird, die Kabine 101 mit Kühlmittel von dem Kondensator 121 versorgt wird und der Niedertemperaturkühler 103 optional mit Kühlmittel von dem Kondensator 121 versorgt wird. In einem dritten Temperiermodus kann eine Kühlung der Batterie 102 ohne Temperierung der Kabine 101 bewirkt werden, wobei die Batterie 102 mit Kühlmittel von der Kältemaschine 122 versorgt wird, die Kabine 101 nicht mit Kühlmittel versorgt wird und der Niedertemperaturkühler 103 mit Kühlmittel von dem Kondensator 121 versorgt wird. In einem vierten Temperiermodus können eine Beheizung der Batterie 102 und eine Kühlung der Kabine 101 bewirkt werden, wobei die Batterie 102 mit Kühlmittel von dem Kondensator 121 versorgt wird, die Kabine 101 mit Kühlmittel von dem Chiller 122 versorgt wird und der Niedertemperaturkühler 103 optional mit Kühlmittel von der Kältemaschiene 122 versorgt wird. In einem fünften Temperiermodus können eine Beheizung der Batterie 102 und eine Beheizung der Kabine 101 bewirkt werden, wobei die Batterie 102 mit Kühlmittel von dem Kondensator 121 versorgt wird, die Kabine 101 mit Kühlmittel von dem Kondensator 121 versorgt wird und der Niedertemperaturkühler 103 mit Kühlmittel von dem Chiller 122 versorgt wird. In einem sechsten Temperiermodus kann eine Beheizung der Batterie 102 ohne Temperierung der Kabine 101 bewirkt werden, wobei die Batterie 102 mit Kühlmittel von dem Kondensator 121 versorgt wird, die Kabine 101 nicht mit Kühlmittel versorgt wird und der NiedeAemperaturkühler 103 mit Kühlmittel von dem Chiller 122 versorgt wird. In einem siebten Temperiermodus kann ohne eine Temperierung der Batterie 102 eine Kühlung der Kabine 101 bewirkt werden, wobei die Batterie 102 nicht mit Kühlmittel versorgt wird, die Kabine 101 mit Kühlmittel von der Kältemaschine 122 versorgt wird und der Niedertemperaturkühler 103 mit Kühlmittel von dem Kondensator 121 versorgt wird. In einem achten Temperiermodus kann ohne eine Temperierung der Batterie 102 eine Beheizung der Kabine 101 bewirkt werden, wobei die Batterie 102 nicht mit Kühlmittel versorgt wird, die Kabine 101 mit Kühlmittel von dem Kondensator 121 versorgt wird und der Niedertemperaturkühter 103 mit Kühlmittel von dem Chiller 122 versorgt wird. In einem neunten Temperiermodus können weder Temperierung der Batterie 102 noch eine Temperierung der Kabine 101 bewirkt werden, wobei weder die Batterie 102, noch die Kabine 101 noch der Niedertemperaturkühler 103 mit Kühlmittel versorgt werden.

Alternative Ausführungsbeispiele der vorliegenden Erfindung ermöglichen auch einen Wärmepumpenbetrieb der Vorrichtung 110 in dem Fahrzeugsystems 100.

Die beschriebenen Ausführungsbeispiele sind nur beispielhaft gewählt und können miteinander kombiniert werden.

### Bezugszeichenliste

- 100: Fahrzeugsystems
- 101: erste Komponente (Kabine)
- 102: zweite Komponente (Batterie)
- 103: dritte Komponente (Niedertemperaturkühler)
- 110: Vorrichtung zur Temperierung
- 121: erster Wärmeüberträger (Kondensator)
- 122: zweiter Wärmeübertrager (Kältemaschine)
- 131: erstes Mehrwegeventil
- 132: zweites Mehrwegeventil
- 133: drittes Mehrwegeventill
- 134: viertes Mehrwegeventil
- 135: fünftes Mehrwegeventil
- 141: erste Kühlmittelpumpe
- 142: zweite Kühlmittelpumpe
- 150: Drosselelement
- 160: Kompressor

## Patentansprüche

1. Vorrichtung (110) zur Temperierung einer Mehrzahl von Komponenten (101, 102) eines Fahrzeugs, wobei die Vorrichtung (110) folgende Merkmale aufweist:
einen ersten Wärmeüberträger (121) mit einem Kühlmitteleingang, einem Kühimittelausgang, einem Kältemitteleingang und einem Kältemittelausgang und einen zweiten Wärmeüberträger (122) mit einem Kühlmifleleingang, einem Kühlmittelausgang, einem Kältemitteleingang und einem Kältemittelausgang, wobei der Kältemittelausgang des ersten Wärmeübertragers (121) mit dem Kältemitteleingang des zweiten Wärmeübertragers (122) und der der Kältemittelausgang des zweiten Wärmeübertragers (122) mit dem Kältemitteleingang des ersten Wärmeübertragers (121) verbunden ist, um einen geschlossenen Kältemihelkreislauf zu bilden;
ein erstes Mehrwegeventil (131) für Kühlmittel mit einem an den Kühlmittelausgang des ersten Wärmeübertragers (121) angeschlossenen Eingangsanschluss sowie mit zumindest einem an eine erste Komponente (101) des Fahrzeugs anschließbaren, ersten Ausgangsanschluss und einem an eine zweite Komponente (102) des Fahrzeugs anschließbaren, zweiten Ausgangsanschtuss_{;}
ein zweites Mehrwegeventil (132) für Kühlmittel mit einem an den Kühlmittelausgang des zweiten Wärmeübertragers (122) angeschlossenen Eingangsanschluss sowie mit zumindest einem an die erste Komponente (101) des Fahrzeugs anschließbaren, ersten Ausgangsanschluss und einem an die zweite Komponente (102) des Fahrzeugs anschließbaren, zweiten Ausgangsanschluss;
ein drittes Mehrwegeventil (133) für Kühlmittel mit einem an die erste Komponente (101) des Fahrzeugs angeschlossenen Eingangsanschluss, mit einem an den Kühlmitteleingang des ersten Wärmeübertragers (121) anschließbaren, ersten Ausgangsanschluss und mit einem an den Kühlmitteleingang des zweiten Wärmeübertragers (122) angeschlossenen, zweiten Ausgangsanschluss; und
ein viertes Mehrwegeventil (134) für Kühlmittel mit einem an die zweite Komponente (102) des Fahrzeugs anschließbaren Eingangsanschluss, mit einem an den Kühlmitteleingang des ersten Wärmeübertragers (121) angeschlossenen, ersten Ausgangsanschluss und mit einem an den Kühlmitteleingang des zweiten Wärmeübertragers (122) angeschlossenen, zweiten Ausgangsanschluss.

2. Vorrichtung (110) gemäß Anspruch 1, bei der die Mehrwegeventile (131, 132, 133, 134) jeweils ausgebildet sind, um einen Fluss des Kühlmittels von dem Eingangsanschluss zu einem der Ausgangsanschlüsse oder in einem veränderbaren Massenstromverhältnis zu mehreren Ausgangsanschlüssen zu ermöglichen.

3. Vorrichtung (110) gemäß einem der vorangegangenen Ansprüche, mit einer elektronischen Steuereinrichtung, die mit einer Eingabeschnittstelle zum Empfangen einer Steuerinformation und mit den Mehrwegeventilen (131, 132, 133, 134) elektrisch verbunden ist und ausgebildet ist, um die Mehrwegeventile (131, 132, 133, 134) basierend auf der Steuerinformation anzusteuern,

4. Vorrichtung (110) gemäß einem der vorangegangenen Ansprüche, bei der der erste Wärmeübertrager (121) ein Kondensator (Wärmeübertrager Kältemittel/Kühlmittel) ist und der zweite Wärmeübertrager (122) ein Chiller (Wärmeübertrager Kältemittel/Kühlmittel) ist.

5. Vorrichtung (110) gemäß einem der vorangegangenen Ansprüche, bei der das erste Mehrwegeventil (131) einen an eine dritte Komponente (103) des Fahrzeugs anschließbaren, dritten Ausgangsanschluss aufweist und das zweite Mehrwegeventil (132) einen an die dritte Komponente (103) des Fahrzeugs anschließbaren, dritten Ausgangsanschluss aufweist, wobei die Vorrichtung (110) ein fünftes Mehrwegeventil (135) für Kühlmittel mit einem an die dritte Komponente (103) des Fahrzeugs anschließbaren Eingangsanschluss, mit einem an den Kühlmitteleingang des ersten Wärmeübertragers (121) angeschlossenen, ersten Ausgangsanschtuss und mit einem an den Kühlmitteleingang des zweiten Wärmeübertragers (122) angeschlossenen, zweiten Ausgangsanschluss aufweist.

6. Vorrichtung (110) gemäß Anspruch 5, bei der die dritte Komponente (103) ein Niedertemperaturkühler ist,

7. Vorrichtung (110) gemäß einem der vorangegangenen Ansprüche, mit einer ersten Kühlmittelpumpe (141), die zwischen den Kühlmittelausgang des ersten Wärmeübertragers (121) und den Eingangsanschluss des ersten Mehrwegeventils (131) geschaltet ist, und mit einer zweiten Kühlmittelpumpe (142), die zwischen den Kühlmittelausgang des zweiten Wärmeübertragers (122) und den Eingangsanschluss des zweiten Mehrwegeventils (132) geschaltet ist.

8. Vorrichtung (110) gemäß einem der vorangegangenen Ansprüche, mit einem Kompressor (160), der zwischen den Kältemittelausgang des zweiten Wärmeübertragers (122) und den Kältemitteleingang des ersten Wärmeübertragers (121) geschaltet ist.

9. Vorrichtung (110) gemäß einem der vorangegangenen Ansprüche, mit einem Drosselelement (150), das zwischen den Kältemittelausgang des ersten Wärmeübertragers (121) und den Kältemitteleingang des zweiten Wärmeübertragers (122) geschaltet ist.

10. Fahrzeugsystems (100) mit folgenden Merkmalen:
einer ersten zu temperierenden Komponente (101) und einer zweiten zu temperierenden Komponente (102); und
einer Vorrichtung (110) gemäß einem der vorangegangenen Ansprüche, wobei der erste Ausgangsanschluss des ersten Mehrwegeventils (131), der erste Ausgangsanschluss des zweiten Mehrwegeventils (132) und der Eingangsanschluss des dritten Mehrwegeventils (133) an die erste Komponente (101) angeschlossen sind, wobei der zweite Ausgangsanschfuss des ersten Mehrwegeventils (131), der zweite Ausgangsanschtuss des zweiten Mehrwegeventils (132) und der Eingangsanschluss des vierten Mehrwegeventils (134) an die zweite Komponente (102) angeschlossen sind.
